(19) **Europäisches Patentamt**
**European Patent Office**
**Office européen des brevets**

(11) **EP 2 574 885 B1**

(12) **FASCICULE DE BREVET EUROPEEN**

(45) Date de publication et mention
de la délivrance du brevet:
**09.04.2014 Bulletin 2014/15**

(51) Int Cl.:
***G01N 5/00*** *(2006.01)*

(21) Numéro de dépôt: **12186095.1**

(22) Date de dépôt: **26.09.2012**

(54) **Dispositif de détection massique de particules en milieu fluide et procédé de mise en oeuvre**

Verfahren und vorrichtung zum bestimmen der masse von partikeln in einem fluid

device for detection of particles mass in a fluid environment and related method

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.09.2011 FR 1158681**

(43) Date de publication de la demande:
**03.04.2013 Bulletin 2013/14**

(73) Titulaire: **Commissariat à l'Énergie Atomique
et aux Énergies Alternatives
75015 Paris (FR)**

(72) Inventeurs:
• **Blanco-Gomez, Gérald**
**38150 BOUGE CHAMBALUD (FR)**
• **Agache, Vincent**
**38800 CHAMPAGNIER (FR)**

(74) Mandataire: **Augarde, Eric
Brevalex
56, boulevard de l'Embouchure
B.P. 27519
31075 Toulouse Cedex 2 (FR)**

(56) Documents cités:
**FR-A1- 2 931 549**

## Description

### DOMAINE TECHNIQUE

La présente invention concerne le domaine de la détection massique ou gravimétrique à partir d'échantillons liquides en utilisant des structures résonantes de types NEMS/MEMS (Nano/Micro Electro Mechanical System).

### ÉTAT DE LA TECHNIQUE ANTÉRIEURE

Dans de nombreux domaines industriels, on cherche à détecter des particules dans un milieu fluide.

C'est le cas notamment dans le domaine des biotechnologies (par exemple la cytométrie) où on a besoin de détecter en direct des agents pathogènes. C'est également le cas dans le domaine de l'analyse physique ou chimique des fluides pour la caractérisation de micro/nanoparticules.

La technique de détection massique repose sur les détection et quantification des décalages de la fréquence de résonance d'un oscillateur électromécanique lorsqu'une particule se dépose à sa surface comme décrit dans le document FR 2931549. Dans l'ensemble de la description, on entend par particule, une bille (pré-fonctionnalisée ou non) de taille micrométrique ou nanométrique, mais aussi un objet chimique ou biologique de types protéine, peptide, fragment d'ADN, bactérie, virus, ou d'autres cellules, etc.

Il existe plusieurs travaux décrivant la mise en vibration d'un résonateur ou oscillateur immergé dans un milieu liquide. Cependant, le facteur de qualité d'une telle structure est relativement faible, en raison de l'augmentation de l'amortissement du mouvement vibratoire lié à la viscosité et densité élevées du milieu liquide par rapport à un milieu sec.

Pour contourner ce problème, il y a eu des travaux consistant à évider l'oscillateur afin d' y confiner la solution à analyser au sein même de l'oscillateur. On peut citer l'article de J. Lee et al., "Toward Attogram Mass Measurements in Solution with Suspended Nanochannel Resonators", Nano letters, 2010, 10, 2537-2542. L'oscillateur se présente sous la forme d'une poutre en porte-à-faux (cantilever) dans laquelle est prévue une veine fluidique. L'oscillateur est mis en vibration par couplage électrostatique, tandis que le fluide à analyser s'écoule au sein de la veine fluidique piloté par un différentiel de pression. Ce dispositif permet de réaliser une détection d'espèces biologiques en milieu liquide tout en entretenant le mouvement oscillatoire dans un environnement sec (air ou sous vide modéré). Deux mécanismes sont prévus pour maintenir de façon temporaire des particules à l'extrémité libre de la poutre. Un premier mécanisme adapté aux structures vibrantes hors plan, concerne l'ajustement de la force centrifuge induite par le mouvement vibratoire de l'oscillateur, ayant l'écoulement contrôlé par un différentiel de pression dans la veine fluidique. Un second mécanisme de maintien temporaire de particules concerne l'alternation rapide du sens de l'écoulement du fluide.

Cependant, ces genres de mécanismes peuvent engendrer un décrochage de particule, et de plus, le système est bloquant, ainsi dès qu'une première particule est fixée, les particules amenées d'un réservoir en amont seront de même fixées à la suite de la première particule. En outre, l'utilisateur doit disposer d'un équipement capable de gérer les flux du liquide en pression. Par ailleurs, la détection de la résonance mécanique est réalisée par un montage optique composé d'un laser, d'une photodiode et d'un circuit électrique de traitement de signaux, lesquels contribuent à l'encombrement global du système.

D'autres travaux ont proposés des oscillateurs comprenant une veine fluidique dont la paroi interne est fonctionnalisée afin de permettre d'accrocher des espèces biologiques ou chimiques déterminées en fonction de leur affinité. Cela suppose une étape préalable et incommode de fonctionnalisation chimique dans tout le réseau fluidique. De plus, un même dispositif ne peut être dédié qu'à la capture d'une seule espèce biologique ou chimique.

On citera encore la demande internationale WO2009/141516 décrivant un dispositif de détection gravimétrique de particules en milieu liquide assurant un facteur de qualité important et un encombrement réduit. Ce dispositif comprend un oscillateur électromécanique plan comportant un canal fluidique en communication avec une cavité traversante ménagée dans l'oscillateur et des moyens d'actionnement de l'oscillateur par couplage électrostatique. Le piégeage des particules est réalisé de manière chimique en fonctionnalisant la paroi interne de la cavité au sein de l'oscillateur ou de manière électrique basée sur un effet diélectrophorétique selon une configuration quadripolaire des électrodes. Ce dispositif ne permet le piégeage des particules qu'en fonction de leur nature biologique.

Ainsi, l'objet de la présente invention est de remédier aux inconvénients précités en proposant un dispositif de détection massique de particules en milieu fluide de sensibilité optimale tout en permettant un piégeage simple, efficace, et plus distinctif des particules.

### EXPOSÉ DE L'INVENTION

L'invention a pour objet un dispositif de détection massique de particules en milieu liquide, comme décrit dans la revendication 1, comportant un oscillateur électromécanique, des moyens d'excitation agencés pour mettre en vibration ledit oscillateur, un circuit fluidique d'alimentation, et un réseau fluidique intégré dans ledit oscillateur, ledit réseau fluidique étant en communication fluidique avec le circuit fluidique d'alimentation, le réseau fluidique comprenant au moins un site de piégeage configuré pour piéger une particule d'intérêt en fonction de la taille de ladite particule d'intérêt.

Ainsi, en adaptant les dimensions du réseau fluidique intégré dans ledit oscillateur, les particules d'intérêt peuvent être détectées de manière sélective en fonction de leur taille.

Avantageusement, ledit site de piégeage est situé au niveau d'un ventre de vibration de l'oscillateur électromécanique.

Ainsi, les sites de piégeage sont placés aux endroits les plus propices pour optimiser la sensibilité de la détection. En effet, la position de la particule piégée au niveau d'un emplacement présentant un maximum d'amplitude de vibration augmente le décalage de la fréquence de résonance et par conséquent optimise la détection de la particule et augmente la sensibilité du dispositif de détection.

Avantageusement, ledit site de piégeage est formé dans une branche fluidique de piégeage montée en dérivation par rapport à une branche fluidique de contournement, ladite branche de piégeage présentant, dans le cas où le site de piégeage est libre, une résistance fluidique inférieure à celle de ladite branche de contournement.

Plus particulièrement, le réseau fluidique comporte une branche fluidique de piégeage formant ledit site de piégeage, et une branche fluidique de contournement qui est montée en dérivation par rapport à ladite branche fluidique de piégeage, ladite branche fluidique de piégeage comprenant un logement prolongé par une restriction, lesdites branches fluidique de piégeage et de contournement étant dimensionnées de manière à ce que lorsque ledit logement est libre, ladite branche de piégeage présente une résistance fluidique inférieure à celle de ladite branche de contournement incitant une première particule d'intérêt à passer par la branche de piégeage pour se faire piéger dans ledit logement, et lorsque ledit logement est occupé, ladite branche de piégeage présente une résistance fluidique supérieure à celle de ladite branche de contournement incitant une particule d'intérêt suivante à passer par la branche de contournement.

Ceci permet de faciliter un piégeage purement fluidique de la particule par opposition à des piégeages plus complexes de type mécanique, optique ou électrique de l'art antérieur. Ainsi, la présente invention permet un couplage efficace entre les emplacements correspondant aux réponses mécaniques optimales de détection massique des particules et un piégeage fluidique passif basé sur la sélection par la taille des particules.

Avantageusement, le réseau fluidique comporte une pluralité de sites de piégeage situés aux niveaux de différents ventres de vibration dudit oscillateur.

Ceci permet de piéger une pluralité de particules, ce qui peut augmenter l'efficacité de détection.

Ledit réseau fluidique est un microréseau ou un nanoréseau fluidique.

Selon un mode de réalisation particulier de l'invention, les sites de piégeage sont arrangés en série aux bornes du circuit d'alimentation.

Ceci facilite le piégeage de particules de manière séquentielle le long d'un chemin fluidique dudit réseau.

Selon un autre mode de réalisation particulier de l'invention, les sites de piégeage sont arrangés en parallèle aux bornes du circuit d'alimentation.

Ceci permet un piégeage quasi-simultané des particules.

Selon un aspect de la présente invention, ledit oscillateur est de type plaque à cavité évidée présentant une forme prise parmi un disque, un anneau, et un polygone.

Selon un autre aspect de la présente invention, ledit oscillateur est un résonateur de type poutre cantilever, poutre bi-encastrée, nanofil, ou membrane.

Ceci permet de choisir l'oscillateur et le nombre de sites de piégeage les plus adaptés aux types des particules d'intérêt.

Avantageusement, ledit oscillateur est de forme carrée et présente une largeur et une épaisseur telles que le rapport de la largeur sur l'épaisseur est supérieur à 10, et par exemple compris entre 10 et 30.

C'est une forme facile à fabriquer et présente quatre sites de piégeage.

Ceci augmente le choix des fréquences de résonance et de la forme du réseau fluidique selon l'application visée.

Avantageusement, le dispositif comporte des moyens d'excitation et des moyens de détection qui sont choisis parmi les moyens suivants : capacitif, piézo-électrique, piézo-métallique, électro-magnétique, piézo-résistif, thermique, thermo-élastique, et optique.

Avantageusement, le circuit d'alimentation comporte des premier et second canaux d'alimentation qui sont séparés l'un de l'autre par le réseau fluidique, ledit réseau fluidique étant en communication d'une part avec le premier canal d'alimentation et d'autre part avec le second canal d'alimentation de sorte que le débit dans le réseau fluidique est contrôlable par un ajustement des débits dans les premier et second canaux d'alimentation. Ainsi, on peut finement ajuster le débit dans le réseau fluidique de manière simple en définissant les différences des débits dans les canaux d'alimentation. Ceci permet également de renouveler les solutions d'intérêt de manière plus aisée en vidangeant tout simplement les canaux d'alimentation qui présentent de grandes sections au lieu de vidanger les solutions d'intérêt à travers le réseau fluidique intégré qui est de plus faible diamètre hydraulique.

Avantageusement, le système de détection comporte un ensemble d'oscillateurs électromécaniques de différentes échelles, chacun des oscillateurs intégrant un réseau fluidique d'une échelle correspondante, les différents réseaux fluidiques étant en communication avec les premier et second canaux d'alimentation.

Ceci permet de piéger de manière sélective des particules de tailles variables présentes dans la solution d'intérêt.

L'invention vise également un procédé de détection massique de particules en milieu liquide, mis en oeuvre avec un dispositif de détection selon l'une quelconque des caractéristiques précédentes, comportant les étapes suivantes :

- alimenter le(s) réseau(x) fluidique(s) avec une solution d'intérêt, de telle sorte que des particules cibles soient piégées dans l'oscillateur,
- mettre en vibration le(s) oscillateur(s) à une(des) fréquence(s) de résonance, et
- détecter un décalage de la fréquence de résonance par rapport à une fréquence de référence.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels :

La Fig. 1 illustre très schématiquement un dispositif de détection massique de particules en milieu liquide, selon l'invention ;

La Fig. 2 illustre un mécanisme de piégeage dans le réseau fluidique intégré à un oscillateur électromécanique, selon l'invention ;

La Fig. 3 illustre une cartographie des amplitudes de vibration pour un oscillateur électromécanique en forme de plaque carrée ;

Les Figs. 4A et 4B illustrent des oscillateurs électromécaniques de type plaque à cavité évidée présentant une forme carrée intégrant des réseaux fluidiques, selon l'invention ;

La Fig. 5 illustre le dispositif de détection dans lequel le circuit d'alimentation comporte des canaux d'alimentations selon un mode de réalisation préféré de l'invention ; et

Les Figs. 6A et 6B illustrent le dispositif de détection comportant une suite d'oscillateurs électromécaniques de différentes échelles selon des modes de réalisation préférés de l'invention.

## EXPOSÉ DÉTAILLÉ D'UN MODE DE RÉALISATION PRÉFÉRÉ

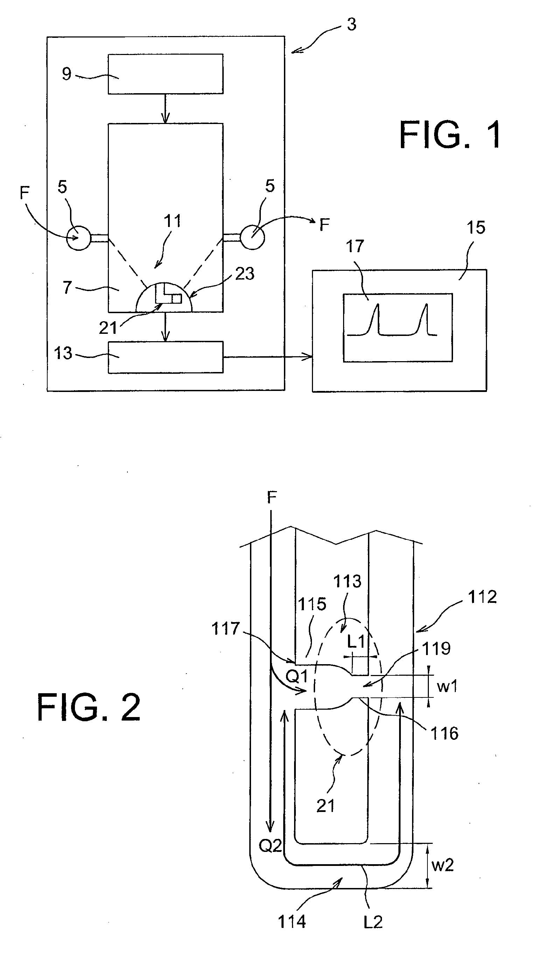

La Fig. 1 illustre très schématiquement un dispositif de détection massique de particules en milieu liquide, selon l'invention.

Le dispositif de détection 3 comporte un circuit fluidique d'alimentation 5, un oscillateur 7 (ou résonateur) électromécanique, des moyens d'excitation 9 agencés pour mettre en vibration l'oscillateur 7, et un réseau fluidique 11 intégré dans l'oscillateur 7 et alimenté en liquide (solution d'intérêt) F par le circuit fluidique d'alimentation 5.

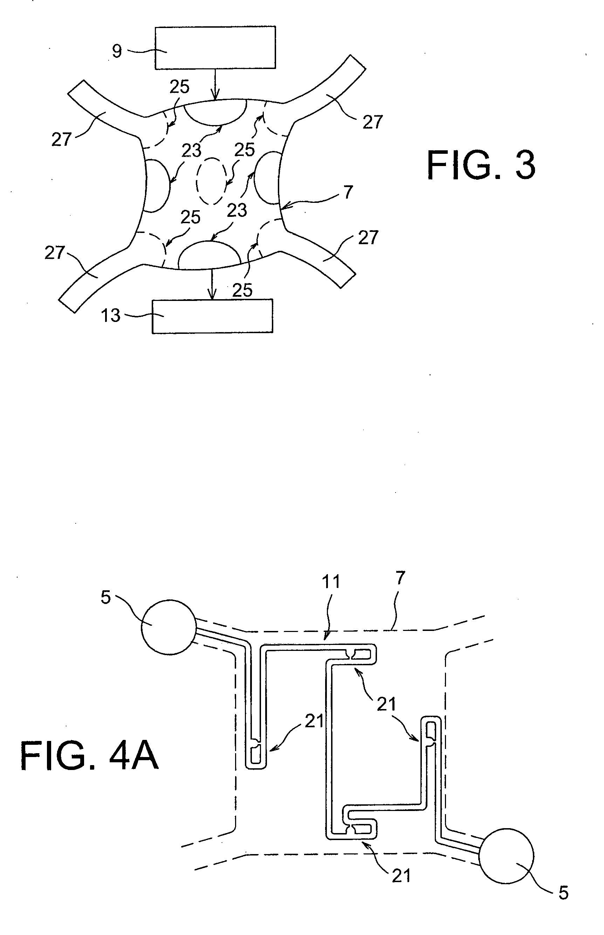

L'oscillateur 7 électromécanique peut se présenter sous la forme d'une poutre, d'un fil, d'une membrane ou d'une plaque supportée par des moyens de support (voir Fig. 3). Le réseau fluidique 11 est, de préférence, intégré dans l'oscillateur 7 de sorte que le liquide (ou fluide) F analysé par le dispositif de détection 3 est isolé de manière étanche de l'environnement dans lequel l'oscillateur 7 est actionné. Le réseau fluidique 11 est un microréseau ou un nanoréseau fluidique qui peut être constitué de canaux de forme sensiblement parallélépipédique gravés au sein de l'oscillateur 7.

Les moyens d'excitation 9 comportent avantageusement des électrodes disposées en regard de l'oscillateur 7. Ces électrodes sont mises en oeuvre et agencées par rapport à l'oscillateur 7 pour que celui-ci puisse entrer en vibration selon un mode de vibration déterminé.

De même, des moyens de détection 13 pour détecter la vibration de l'oscillateur 7 peuvent également comprendre des électrodes disposées en regard de l'oscillateur 7. Dans ce cas, les moyens de détection 13 sont avantageusement intégrés au dispositif de détection 3. Ces moyens de détection 13 sont configurés pour détecter des variations de la fréquence de vibration ou fréquence de résonance de l'oscillateur 7 sachant que toute variation de fréquence est indicative d'une variation de masse de l'oscillateur 7, notamment, suite à un dépôt de particules dans ce dernier. Les moyens de détection 13 peuvent être reliés à un dispositif de traitement 15 de type ordinateur comprenant des moyens de visualisation 17 pour analyser l'évolution de la fréquence de résonance et ainsi procéder à la détection de particules.

Les particules peuvent être des billes fonctionnalisées, par exemple des billes métalliques dont la surface est fonctionnalisée, de manière à constituer une surface de collecte (ou surface de capture) d'une espèce chimique ou biologique, dite espèce cible. Ainsi, avec un oscillateur 7 de même type, on peut moduler le type de bille introduite, et en particulier selon la fonctionnalisation de sa surface externe, de façon à collecter une espèce chimique ou biologique donnée. Au fur et à mesure que la capture s'effectue, la masse de l'oscillateur 7 croît, entraînant une variation de la fréquence de résonance, dont la détermination permet de quantifier la masse de l'espèce cible collectée. Cela permet d'estimer la quantité ou la concentration de l'espèce cible dans le liquide circulant dans le réseau fluidique 11. Les particules peuvent aussi être des espèces biologiques de type cellule, bactéries ou virus. L'évolution de la masse de l'oscillateur 7 permet alors de déterminer le comportement de l'espèce dans ce dernier. Par exemple, on peut introduire une cellule et la soumettre à une contrainte (en la soumettant à un fluide particulier) et vérifier si elle vit (sa masse reste constante, ou augmente) ou si elle meurt (sa masse diminue).

On notera que le dispositif de détection 3 peut être réalisé en deux parties selon une méthode connue décrite dans la demande internationale WO2009/141516 de la demanderesse. Une première partie peut être structurée sur un premier substrat et une deuxième partie peut être réalisée sur un deuxième substrat scellé sur le premier substrat. Les substrats peuvent être choisis parmi des matériaux de nature métallique, polycristalline, ou monocristalline.

Conformément à l'invention, le réseau fluidique 11 comprend au moins un site de piégeage 21 configuré pour piéger une particule d'intérêt en fonction de la taille de la particule d'intérêt de types cellules ou billes pré-fonctionnalisée.

La Fig. 2 illustre le mécanisme de piégeage dans le réseau fluidique intégré à un oscillateur électromécanique.

Le piégeage fluidique d'une particule d'intérêt est assuré par un circuit fluidique de piégeage 112 appartenant au réseau fluidique 11. Ce circuit fluidique 112 comporte une branche fluidique de piégeage 113 montée par rapport à une branche fluidique de contournement 114 en dérivation, le site de piégeage 21 étant formé dans la branche fluidique de piégeage 113. En effet, la branche de piégeage 113 correspond à un canal comportant un logement 115 (par exemple, de section sensiblement semi-circulaire) prolongé par une restriction 116 selon une configuration de type entonnoir. Le logement 115 qui correspond à l'emplacement de piégeage est situé en amont de la restriction 116 par rapport à l'écoulement du liquide F.

Ainsi, dans le circuit de piégeage 112, l'écoulement du liquide F se scinde au niveau de l'orifice amont 117 du logement 115, en deux chemins qui se raccordent au niveau de l'orifice de sortie 119 de la restriction 116. Le premier chemin est aménagé par la restriction 116 de la branche de piégeage 113 et le second chemin plus long, est formé par la branche de contournement 114.

La configuration et le dimensionnement du circuit de piégeage 112 sont réalisés en accord avec les applications de la détection et les caractéristiques des particules visées. Ainsi, la géométrie du site de piégeage 21 est dimensionnée de manière sélective en fonction de la taille ou diamètre de la particule d'intérêt. En particulier, le logement 115 et l'orifice entre ce dernier et la restriction 116 peuvent être facilement dimensionnés pour accueillir et retenir la particule d'intérêt.

Le principe de piégeage fluidique de particules est décrit dans la publication de W. H. Tan et al., "A trap-and-release integrated microfluidic system for dynamic microarray applications", Proceedings of the National Academy of Sciences of the United States of America, 2007, 104, 1146-1151. Ce principe repose sur une variation de la résistance fluidique 'vue' par chaque particule circulant dans le réseau fluidique.

Ainsi, les branches de piégeage 113 et de contournement 114 sont dimensionnellement configurées pour présenter dans le cas où le site de piégeage 21 est libre, une résistance fluidique inférieure à celle de la branche de contournement 114.

Plus particulièrement, lorsque le site de piégeage 21 est libre, une particule donnée a tendance à passer par la branche de piégeage 113 qui présente une résistance fluidique relativement plus faible que celle de contournement 114 et se fait donc piéger par le site de piégeage 21. La particule placée dans le site de piégeage 21 joue alors le rôle d'un obstacle, augmentant ainsi considérablement la résistance fluidique de la branche de piégeage 113. Ainsi, la particule suivante qui va 'voir' le site 21 occupé va observer une très grande résistance fluidique et va donc emprunter la branche de contournement 114.

Ce critère de piégeage impose que le débit $Q_1$ dans la branche de piégeage 113 libre soit supérieur à celui $Q_2$ de la branche de contournement 114 selon l'expression suivante :

$$P = \left(\frac{C_2}{C_1}\right)\left(\frac{L_2}{L_1}\right)\left(\frac{W_2+H}{W_1+H}\right)^2\left(\frac{W_1}{W_2}\right)^3 = \frac{Q_1}{Q_2} \geq 1 \qquad\qquad (1)$$

où $H$ représente la hauteur des branches 113 et 114 sachant que tous les canaux intégrés dans l'oscillateur 7 ont sensiblement la même hauteur; $W_1$ représente la largeur du premier chemin (c'est-à-dire, la largeur de la restriction 116 dans la branche de piégeage 113); $W_2$ représente la largeur du second chemin (c'est-à-dire, la largeur de la branche de contournement 114); $L_1$ (respectivement $L_2$) représente la longueur du premier chemin (respectivement du second chemin); $\alpha_1$ (respectivement $\alpha_2$) est le ratio entre la largeur et la hauteur du premier chemin (respectivement du second chemin) en respectant la condition $\alpha_{1,2} \leq 1$; et $C_{1,2}(\alpha_{1,2}) = f \times Re$ où $f$ est un coefficient de friction et $Re$ le nombre de Reynolds. Ainsi, pour un bon fonctionnement de piégeage, la valeur de $P$ relatif aux dimensions du circuit fluidique de piégeage 112 est choisie supérieure à 1 tout en étant minimisée afin de limiter l'encombrement. On note que $P$ est indépendant des intervalles de débit utilisés dans la limite des régimes laminaires (Re << 1).

Ainsi, on prend en compte le diamètre de la particule d'intérêt pour déterminer le dimensionnement du circuit de piégeage 112, et donc du réseau fluidique 11 qui lui-même permet de déterminer les dimensions de l'oscillateur 7. Généralement, on dimensionne W1 et W2 en fonction de la dimension de la particule que l'on souhaite piéger. Ensuite, on détermine les autres paramètres dimensionnels ou fluidiques du dispositif en utilisant l'équation (1).

Par exemple, afin de retenir des particules de 15 $\mu m$ de diamètre, on peut utiliser pour les canaux du circuit de piégeage 112, les paramètres suivants: une hauteur $H$ de 18 $\mu m$; un premier chemin (restriction 116 dans la branche de piégeage 113) de largeur $W_1$ de 7,5 $\mu m$ et de longueur $L_1$ de 4,5 $\mu m$ ; et un second chemin de largeur $W_2$ de 20 $\mu m$ et de longueur $L_2$ de 172,5 $\mu m$. Ainsi, le ratio des longueurs des premier et second chemins est de 38,3 et la valeur de $P$ est de 3,95. On notera que les microbilles ou particules de 15 $\mu m$ peuvent être fonctionnalisées pour l'étude de réactions d'hybridation ou pour réaliser une détection spécifique de sondes ADN, antigènes, protéines. De même, le site de piégeage 21 peut aussi être fonctionnalisé ce qui augmente la capacité de détection.

Selon un deuxième exemple, si on veut retenir des particules ou billes de plus petite taille par exemple de l'ordre de 2 $\mu m$, et en prenant en compte une résolution de fabrication autour de 1 $\mu m$, les paramètres suivants peuvent être utilisés pour le dimensionnement du circuit de piégeage 112: $H$ = 3 $\mu m$, $W_1$ = 1 $\mu m$, $W_2$ = 4 $\mu m$, ce qui implique un ratio de longueurs $L_1/L_2$ > 24,7. On peut par exemple prendre $L_1/L_2$ = 50 et dans ce cas, la valeur de $P$ atteint 2,03, ce qui est suffisant pour que le site de piégeage 21 fonctionne convenablement tout en restant assez faible afin de minimiser l'encombrement.

Un troisième exemple qui peut être appliqué à la biologie cellulaire concerne la détection des virus VIH qui présentent typiquement un diamètre de 100$nm$ et une masse d'environ 80$ag$. Dans ce cas, les paramètres suivants peuvent être utilisés pour le dimensionnement du circuit de piégeage : $H$ = 200 $nm$, $W_1$ = 70 $nm$, $W_2$ = 150 $nm$, ce qui implique un ratio de longueurs $L_1/L_2$ au moins égal à 7, et dans le cas de la limite inférieure, la valeur de $P$ atteint 1,02.

Avantageusement, le réseau fluidique 11 comprend au moins un site de piégeage 21 situé au niveau d'un ventre 23 de vibration de l'oscillateur 7 électromécanique. L'emplacement du site de piégeage 21 au niveau du ventre 23 de vibration de l'oscillateur 7 est avantageux, car il augmente la sensibilité de détection de la particule d'intérêt.

En effet, lorsqu'une particule de masse $\Delta m$ se fixe sur l'oscillateur 7 électromécanique, le décalage de la fréquence de résonance $\Delta f$ de l'oscillateur 7 dépend de la masse ajoutée $\Delta m$, de la masse totale $m$ de l'oscillateur 7 ainsi que d'un coefficient de correction $\alpha$ qui dépend spécifiquement de la position de la particule ajoutée définie selon l'équation suivante :

$$\frac{\Delta f}{f} = -\alpha \frac{\Delta m}{m}$$

Ainsi, en piégeant une particule de masse ponctuelle $\Delta m$ donnée dans une position présentant un maximum d'amplitude de vibration on obtient un décalage de la fréquence de résonance maximum. Autrement dit, le piégeage d'une particule dans une telle position, (c'est-à-dire, dans un ventre de vibration), permet de minimiser le coefficient de correction $\alpha$ et par conséquent, d'accroître la sensibilité du dispositif.

A titre d'exemple, la Fig. 3 illustre une cartographie des amplitudes de vibration pour un oscillateur 7 électromécanique en forme de plaque carrée. On utilise par exemple des moyens d'excitation 9 capacitive (via les électrodes) pour exciter l'oscillateur 7 selon un mode d'excitation de contour dit de Lamé. On utilise aussi les moyens de détection 13 pour détecter la réponse mécanique de l'oscillateur en terme fréquentiel.

Les réponses mécaniques de l'oscillateur 7 selon cet exemple, montrent que les coins et le centre de la plaque constituent des noeuds de vibration 25 (zones de vibration minimale), tandis que les milieux des côtés de la plaque constituent des ventres de vibration 23 (zones dont l'amplitude de vibration est maximale).

Ainsi, on utilise la régionalisation de la réponse massique de l'oscillateur 7 pour placer le (s) site(s) de piégeage 21 dans les zones 23 présentant le maximum d'amplitude de vibration en fonction de sa géométrie et de son mode d'excitation.

Avantageusement, selon la présente invention, l'emplacement du site de piégeage 21 au sein de l'oscillateur 7 permet un couplage efficace entre le lieu correspondant à une réponse mécanique optimale de détection massique d'une particule et un piégeage fluidique passif basé sur la ségrégation par la taille de la particule.

Par ailleurs, on peut prendre avantage des noeuds de vibration 25 pour fixer l'oscillateur 7. En effet, la Fig. 3 montre que les moyens de supports 27 en forme de bras sont répartis aux coins de la plaque carrée afin de minimiser les contraintes mécaniques appliquées sur le résonateur lors d'un cycle vibratoire. Alors, la vibration n'est pas dissipée au reste du dispositif de détection 3 et est concentrée sur l'oscillateur 7. On notera que les bras sont aussi utilisés pour faire passer les connexions entre le réseau fluidique 11 et le circuit d'alimentation 5.

On notera que le réseau fluidique peut comporter plusieurs sites de piégeage 21 situés sur le même ventre 23 de vibration de l'oscillateur 7.

En outre, dans le cas où l'oscillateur 7 comporte plusieurs ventres 23 de vibrations, le réseau fluidique 11 peut comporter une pluralité de sites de piégeage 21 situés aux niveaux des différents ventres 23 de vibration de l'oscillateur 7.

Les sites de piégeage 21 peuvent être associés selon une configuration quelconque aux bornes du circuit d'alimentation 5 dépendant de l'application visée. Ainsi, les sites de piégeage 21 peuvent être arrangés en série, en parallèle ou selon une toute autre configuration combinant les deux types d'associations.

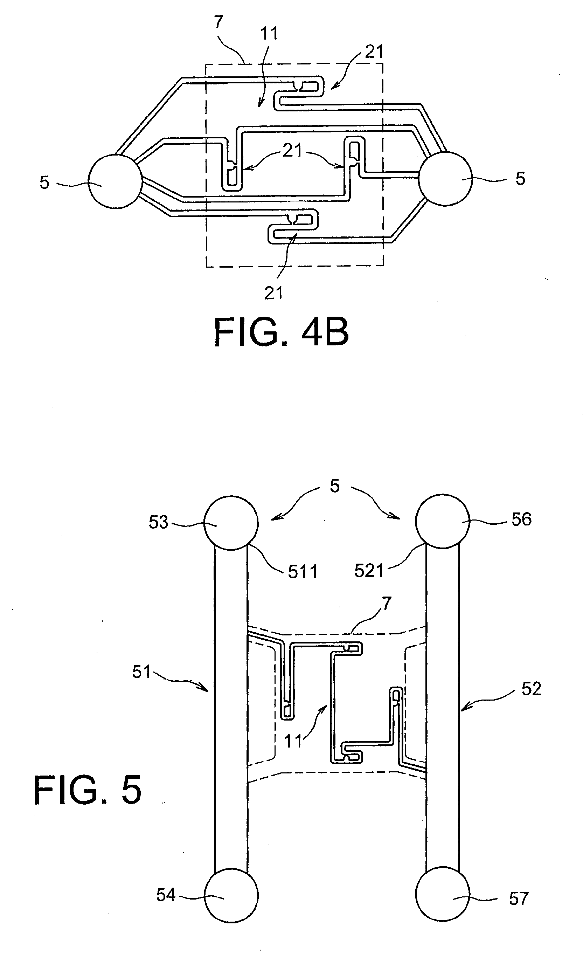

Les Figs. 4A et 4B illustrent des oscillateurs électromécaniques de type plaque à cavité évidée présentant une forme carrée intégrant des réseaux fluidiques, en configuration série (Fig. 4A) et parallèle (Fig. 4B).

L'oscillateur de forme carrée est facile à fabriquer et peut présenter une largeur et une épaisseur telles que le rapport de la largeur sur l'épaisseur est supérieur à 10, et de préférence compris entre 10 et 30. Cet oscillateur comporte en son sein quatre sites de piégeage situés aux niveaux des quatre ventres de vibration de l'oscillateur.

Selon l'exemple de la Fig. 4A, les sites de piégeage 21 sont arrangés en série aux bornes du circuit d'alimentation 5. Ainsi, l'occupation des sites 21 est réalisée de manière séquentielle.

En revanche, dans l'exemple de la Fig. 4B, les sites de piégeage 21 sont arrangés en parallèle aux bornes du circuit d'alimentation 5, chaque site 21 étant directement relié au circuit d'alimentation 5. Dans ce cas, on peut avoir un piégeage quasi-simultané des particules. De plus, les sites de piégeage 21 peuvent être différemment dimensionnés afin de piéger des particules de tailles différentes.

Plus généralement, l'oscillateur 7 de type plaque à cavité évidée peut présenter la forme d'un disque, d'un anneau, ou d'un polygone. Bien entendu, le nombre de ventres 23 de vibration dépend de la forme de la plaque, mais aussi du mode de vibration.

L'oscillateur peut aussi présenter la forme d'une poutre en porte-à-faux (cantilever), d'une poutre bi-encastrée, d'un nanofil, ou d'une membrane qui peut éventuellement être percée. Dans le cas d'une poutre cantilever, qui vibre selon le mode fondamental de flexion, il y a seulement un ventre de vibration au sommet libre de la poutre qui vibre avec la plus grande amplitude.

Par ailleurs, les moyens d'excitation 9 peuvent être choisis parmi les moyens suivants : capacitif, piézo-électrique, piézo-métallique, électromagnétique, thermique, thermo-élastique, et optique.

Avantageusement, le piégeage fluidique et la maximisation de la réponse du détecteur massique selon l'invention sont indépendants du mode d'excitation et permet donc de choisir le mode d'excitation vibratoire le plus adapté. Le mode vibratoire peut être choisi en fonction du type de l'oscillateur 7 et de l'application visée. Ainsi, le mode vibratoire peut être pris dans l'ensemble constitué par un mode vibratoire de volume (extensionnel), un mode de contour de Lamé, un mode vibratoire dit de « verre à vin » (wine-glass), un mode vibratoire de torsion, un mode vibratoire de flexion, et un mode de membrane.

En outre, les moyens de détection 13 peuvent aussi être choisis de manière indépendante parmi les moyens suivants: capacitif, piézo-électrique, piézo-métallique, piézo-résistif, thermo-élastique, et optique.

La Fig. 5 illustre un dispositif de détection dans lequel le circuit d'alimentation comporte des canaux d'alimentation selon un mode de réalisation préféré de l'invention.

Le circuit d'alimentation 5 comporte des premier et second canaux d'alimentation 51, 52 (ou canaux bypass) dont les sections sont dans une échelle de quelques centaines de microns de large et donc beaucoup plus grandes que celles des canaux du réseau fluidique 11 qui sont dans une échelle micrométrique ou nanométrique. L'extrémité amont 511 du premier canal 51 d'alimentation est connectée à une première entrée 53 fluidique et son extrémité aval 513 est connectée à une première sortie 54 fluidique. De même, les extrémités amont 521 et aval 523 du second canal 52 d'alimentation sont connectées à des secondes entrée 56 et sortie 57 fluidiques respectivement. Les entrées et sorties sont interchangeables (autrement dit, une embouchure peut faire fonction d'entrée ou de sortie, en fonction de l'utilisation du dispositif).

Les premier et second canaux d'alimentation sont séparés l'un de l'autre par le réseau fluidique. Le réseau fluidique 11 est alors un réseau central qui est en communication d'une part avec le premier canal 51 d'alimentation et d'autre part avec le second canal 52 d'alimentation de sorte que le débit dans le réseau fluidique soit contrôlable par un ajustement des débits dans les premier et second canaux d'alimentation. Les premier et second canaux d'alimentation 51, 52 sont avantageusement montés de manière sensiblement symétrique par rapport au réseau fluidique 11 central.

Les premier et second canaux d'alimentation 51, 52 permettent de régler de manière précise et simple le débit dans le réseau fluidique 11 central. En effet, on peut régler le débit dans chacun des canaux d'alimentation 51, 52 et le différentiel de débit entre les deux canaux 51, 52 permet de piloter très finement le débit dans le réseau fluidique 11 central.

De plus, les premier et second canaux d'alimentation 51, 52 qui sont de large section par rapport au réseau fluidique 11 central peuvent être rapidement vidangés permettant ainsi de renouveler les solutions d'intérêt de manière aisée. Ainsi, il n'est pas nécessaire de faire passer tout le fluide par le réseau 11 central (un conduit de faible section implique le besoin d'augmenter la différence de pression entre amont et aval pour maintenir un haut débit pour vidanger), ce qui aurait pris beaucoup plus de temps et où de plus, il y aurait eu des risques de blocage ou d'obstruction.

On notera que dans l'exemple de la Fig. 5, les sites de piégeage 21 sont associés en série mais bien entendu, ils peuvent aussi être associés en parallèle (voir Fig. 4B) ou selon une toute autre configuration.

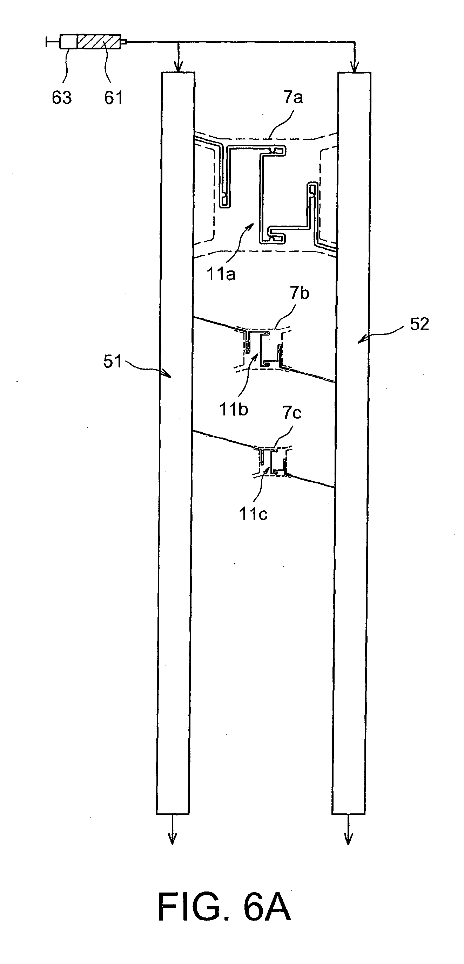

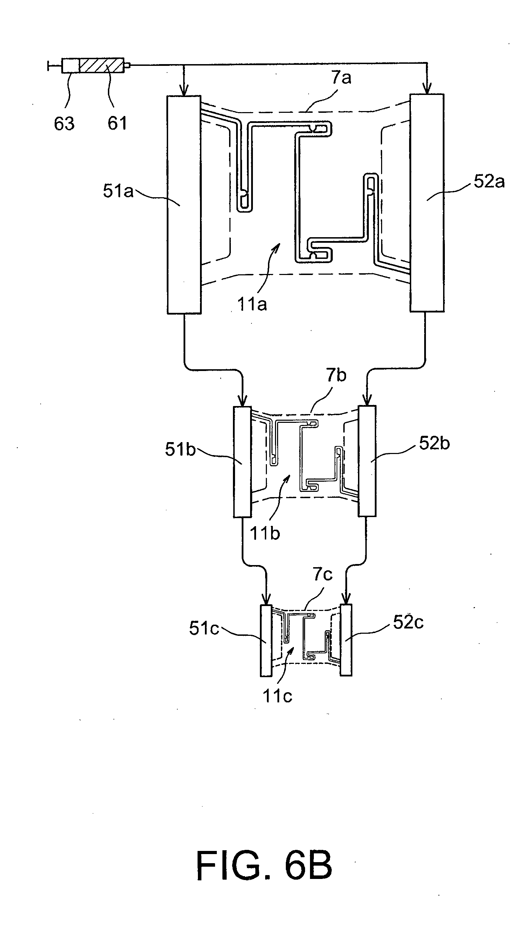

L'alimentation et le contrôle de pilotage du fluide peuvent être assurés par un générateur de débit de type pousse seringue 63 (voir Fig. 6). En variante, le pilotage et l'alimentation du fluide peuvent être assurés par un générateur de pression (non représenté) de type flacon pressurisé.

Par ailleurs, on notera qu'il est aussi envisageable d'avoir un circuit d'alimentation 5 comportant une seule entrée fluidique et une seule sortie fluidique avec le réseau fluidique en communication directe entre l'entrée fluidique et la sortie fluidique (voir Figs. 4A, 4B).

Par ailleurs, le dispositif de détection selon l'invention peut comporter un ensemble d'oscillateurs 7 électromécaniques de mêmes ou de différentes échelles connectés en série ou en parallèles aux bornes du circuit d'alimentation 5.

Les Figs. 6A et 6B illustrent un dispositif de détection comportant une suite d'oscillateurs électromécaniques de différentes échelles selon des modes de réalisation préférés de l'invention.

Chacun des oscillateurs 7a-7c électromécaniques intègre un réseau fluidique 11a-11c d'une échelle correspondante et les différents réseaux fluidiques 11a-11c sont en communication avec les premier et second canaux d'alimentation 51, 52.

Les différents réseaux fluidiques 11a-11c sont connectés en dérivation entre les premier et second canaux d'alimentation 51, 52. Ainsi, une distribution des échantillons liquides en configuration parallèle peut traverser les réseaux fluidiques 11a-11c de piégeage de particules de la plus grande taille vers la plus petite taille (comme représenté sur les Fig. 6A) ou inversement (non représenté), en introduisant un module de filtration entre le circuit d'alimentation et les réseaux fluidiques 11a-11c.

Ainsi, les différents réseaux fluidiques 11a-11c peuvent sélectivement piéger des particules de tailles variables présentes dans le fluide correspondant à la solution d'intérêt 61 alimentée par le générateur d'alimentation 63. Ceci est particulièrement intéressant pour des échantillons ou solutions d'intérêt de type sérum accueillant plusieurs espèces de particules de tailles très diverses. Ainsi, un premier réseau fluidique 11a peut être dimensionnellement configuré pour piéger des cellules de tailles $10\mu m$-$100\mu m$, un deuxième réseau fluidique 11b peut être dimensionnellement configuré pour piéger des bactéries de tailles $0,5\mu m$ - $5\mu m$, et un troisième réseau fluidique 11c peut être dimensionnellement configuré pour piéger des virus de tailles $10nm$ - $400nm$.

L'exemple de la Fig. 6A, montre que chacun des premier et second canaux d'alimentation 51, 52 présente une section constante. En effet, il est assez pratique pour des raisons de fabrication et de vidange d'avoir des canaux d'alimentation de même section tout le long des canaux.

En variante, la Fig. 6B montre que chacun des premier et second canaux d'alimentation 51, 52 peut être formé d'un ensemble de tronçons 51a-51c, 52a-52c de différentes sections. Ceci permet de maintenir un même ratio de résistances hydrauliques entre les tronçons d'alimentation 51a-51c, 52a-52c et ceux du réseau central 11a-11c. Ainsi, on peut faire varier l'ordre de grandeur des résistances hydrauliques des canaux d'alimentation en fonction de l'échelle du réseau fluidique afin de mieux régler les débits dans les différents réseaux 11a-11c.

Selon un autre exemple, chacun des canaux d'alimentations peut comporter seulement deux tronçons : un premier tronçon connecté aux réseaux microfluidiques et un second tronçon de plus faible section connecté aux réseaux nanofluidiques permettant d'augmenter la plage de débit pour les plus petits réseaux fluidiques.

Un procédé de détection massique de particules en milieu fluide selon l'invention consiste à mettre en oeuvre le dispositif 3 de détection décrit précédemment. Cette mise en oeuvre comprend l'alimentation du(des) réseau(x) fluidique(s) 11a-11c avec une solution d'intérêt 61 par l'intermédiaire des canaux d'alimentation 51, 52 de sorte que des particules cibles soient piégées dans l'oscillateur. Ensuite, on utilise les moyens d'excitation 9 pour mettre en vibration le(s) oscillateur(s) 7a-7c à leurs fréquences de résonance respectives. Finalement, on utilise les moyens de détection 13 pour détecter tout décalage de la fréquence de résonance par rapport à une fréquence de référence, indicatif du piégeage de particule(s). Par fréquence de référence, on entend par exemple une fréquence de résonance déterminée préalablement. Il peut notamment s'agir d'une fréquence de résonance avant l'alimentation du réseau fluidique avec la solution d'intérêt (résonateur « à vide »), ou d'une fréquence de résonance durant l'alimentation du réseau avec la solution d'intérêt, mais mesurée à un instant antérieur.

On peut observer des signaux ou pics de piégeage sur les moyens de visualisation 17 indiquant l'occupation des différents sites de piégeage 21.

Bien entendu, diverses modifications peuvent être apportées par l'homme du métier à l'invention qui vient d'être décrite.

**Revendications**

1. Dispositif de détection massique de particules en milieu liquide, comportant un oscillateur (7) électromécanique, des moyens d'excitation (9) agencés pour mettre en vibration ledit oscillateur, un circuit fluidique d'alimentation (5), et un réseau fluidique (11) intégré dans ledit oscillateur, ledit réseau fluidique (11) étant en communication fluidique avec ledit circuit fluidique d'alimentation (5), **caractérisé en ce que** le réseau fluidique (11) comprend au moins un site de piégeage (21) qui comprend un logement (115) et un orifice, et dont la géométrie est dimensionnée pour accueillir et retenir de manière sélective une particule d'intérêt en fonction de la taille de ladite particule d'intérêt.

2. Dispositif de détection selon la revendication 1, **caractérisé en ce que** ledit site de piégeage est situé à une position correspondant à un maximum d'amplitude (23) de vibration de l'oscillateur (7) électromécanique.

3. Dispositif de détection selon la revendication 1 ou 2, **caractérisé en ce que** ledit site de piégeage est formé dans une branche fluidique de piégeage montée en dérivation par rapport à une branche fluidique de contournement, ladite branche de piégeage présentant, dans le cas où le site de piégeage est libre, une résistance fluidique inférieure à celle de ladite branche de contournement.

4. Dispositif de détection selon la revendication 2 ou 3, **caractérisé en ce que** le réseau fluidique comporte une pluralité de sites de piégeage situés à des positions correspondant à différents maxima d'amplitude de vibration dudit oscillateur.

5. Dispositif de détection selon la revendication 4, **caractérisé en ce que** les sites de piégeage sont arrangés en série aux bornes du circuit d'alimentation.

6. Dispositif de détection selon la revendication 4, **caractérisé en ce que** les sites de piégeage sont arrangés en parallèle aux bornes du circuit d'alimentation.

7. Dispositif de détection selon l'une quelconque des revendications précédentes, **caractérisé en ce que** ledit oscillateur est de type plaque à cavité évidée présentant une forme prise parmi un disque, un anneau, et un polygone.

8. Dispositif de détection selon la revendication 7, **caractérisé en ce que** ledit oscillateur est de forme carrée et présente une largeur et une épaisseur telles que le rapport de la largeur sur l'épaisseur est compris entre 10 et 30.

9. Dispositif de détection selon l'une quelconque des revendications 1 à 6, **caractérisé en ce que** ledit oscillateur est un résonateur de type poutre cantilever, poutre bi-encastré, nanofil ou membrane.

10. Dispositif de détection selon l'une quelconque des revendications précédentes, **caractérisé en ce que** lesdits moyens d'excitation sont choisis parmi les moyens suivants : capacitif, piézo-électrique, piézo-métallique, électromagnétique, thermique, thermo-élastique, et optique.

11. Dispositif de détection selon l'une quelconque des revendications précédentes, **caractérisé en ce qu'il** comporte des moyens de détection choisis parmi les moyens suivants: capacitif, piézo-électrique, piézo-métallique, piézo-résistif, thermo-élastique, et optique.

12. Dispositif de détection selon l'une quelconque des revendications précédentes, **caractérisé en ce que** ledit réseau fluidique est un microréseau ou un nanoréseau fluidique.

13. Dispositif de détection selon l'une quelconque des revendications précédentes, **caractérisé en ce que** le circuit d'alimentation comporte des premier et second canaux d'alimentation séparés l'un de l'autre par le réseau fluidique, ledit réseau fluidique étant en communication d'une part avec le premier canal d'alimentation et d'autre part avec le second canal d'alimentation de sorte que le débit dans le réseau fluidique soit contrôlable par un ajustement des débits dans les premier et second canaux d'alimentation.

14. Dispositif de détection selon la revendication 13, **caractérisé en ce qu'il** comporte un ensemble d'oscillateurs électromécaniques de différentes échelles, chacun des oscillateurs intégrant un réseau fluidique d'une échelle correspondante et **en ce que** les différents réseaux fluidiques sont en communication avec les premier et second canaux d'alimentation.

15. Procédé de détection massique de particules en milieu liquide, mise en oeuvre avec un dispositif de détection selon l'une quelconque des revendications précédentes, **caractérisé en ce qu'il** comporte les étapes suivantes :

   - alimenter le(s) réseau(x) fluidique(s) avec une solution d'intérêt,
   - mettre en vibration le(s) oscillateur(s) à une(des) fréquence(s) de résonance, et

- détecter un décalage de la fréquence de résonance par rapport à une fréquence de résonance de référence.

**Patentansprüche**

1. Vorrichtung zur Erfassung der Masse von Partikeln in flüssiger Umgebung, umfassend einen elektromechanischen Oszillator (7), Anregungsmittel (9), die dazu ausgelegt sind, den Oszillator in Schwingung zu versetzen, einen Fluidversorgungssystem (5), sowie ein Fluidnetz (11), das in den Oszillator integriert ist, wobei das Fluidnetz (11) in Fluidverbindung mit dem Fluidversorgungssystem (5) ist, **dadurch gekennzeichnet, dass** das Fluidnetz (11) wenigstens eine Einfangstelle (21) umfasst, die eine Aufnahme (115) und eine Öffnung umfasst, und deren Geometrie dazu dimensioniert ist, ein interessierendes Partikel als Funktion der Größe des interessierenden Partikels in selektiver Weiser zu empfangen und festzuhalten.

2. Vorrichtung zur Erfassung nach Anspruch 1, **dadurch gekennzeichnet, dass** die Einfangstelle an einer Position angeordnet ist, die einem Maximum der Schwingungsamplitude (23) des elektromechanischen Oszillators (7) entspricht.

3. Vorrichtung zur Erfassung nach Anspruch 1 oder 2, **dadurch gekennzeichnet, dass** die Einfangstelle in einem Einfangfluidarm gebildet ist, der in einer Abzweigung bezogen auf einen Umgehungsfluidarm gebildet ist, wobei der Einfangarm in dem Fall, wo die Einfangstelle frei ist, einen Fluidwiderstand aufweist, der kleiner ist als jener des Umgehungsarms.

4. Vorrichtung zur Erfassung nach Anspruch 2 oder 3, **dadurch gekennzeichnet, dass** das Fluidnetz eine Mehrzahl von Einfangstellen umfasst, die an Positionen angeordnet sind, welche verschiedenen Maxima der Schwingungsamplitude des Oszillators entsprechen.

5. Vorrichtung zur Erfassung nach Anspruch 4, **dadurch gekennzeichnet, dass** die Einfangstellen an den Anschlüssen des Versorgungssystems in Reihe angeordnet sind.

6. Vorrichtung zur Erfassung nach Anspruch 4, **dadurch gekennzeichnet, dass** die Einfangstellen an den Anschlüssen des Versorgungsssytems parallel angeordnet sind.

7. Vorrichtung zur Erfassung nach einem der vorhergehenden Ansprüche, **dadurch gekennzeichnet, dass** der Oszillator vom Typ einer Platte mit ausgekehlter Aushöhlung ist, die eine Form aufweist ausgewählt aus einer Scheibe, einem Ring und einem Polygon.

8. Vorrichtung zur Erfassung nach Anspruch 7, **dadurch gekennzeichnet, dass** der Oszillator eine quadratische Form hat und eine Breite und eine Dicke derart aufweist, dass das Verhältnis der Breite zur Dicke zwischen 10 und 30 enthalten ist.

9. Vorrichtung zur Erfassung nach einem der Ansprüche 1 bis 6, **dadurch gekennzeichnet, dass** der Oszillator ein Resonator vom Typ Auslegerträger, doppelseitig eingespannter Träger, Nanodraht oder Membran ist.

10. Vorrichtung zur Erfassung nach einem der vorhergehenden Ansprüche, **dadurch gekennzeichnet, dass** die Anregungsmittel ausgewählt sind aus den folgenden Mitteln: kapazitiv, piezoelektrisch, piezometallisch, elektromagnetisch, thermisch, thermoelastisch und optisch.

11. Vorrichtung zur Erfassung nach einem der vorhergehenden Ansprüche, **dadurch gekennzeichnet, dass** sie Mittel zur Erfassung umfasst, die aus den folgenden Mitteln ausgewählt sind: kapazitiv, piezoelektrisch, piezometallisch, piezoresistiv, thermoelastisch und optisch.

12. Vorrichtung zur Erfassung nach einem der vorhergehenden Ansprüche, **dadurch gekennzeichnet, dass** das Fluidnetz ein Fluid-Mikronetz oder - Nanonetz ist.

13. Vorrichtung zur Erfassung nach einem der vorhergehenden Ansprüche, **dadurch gekennzeichnet, dass** der Versorgungssystem einen ersten und einen zweiten Versorgungskanal umfasst, die voneinander durch das Fluidnetz getrennt sind, wobei das Fluidnetz in Verbindung ist einerseits mit dem ersten Versorgungskanal und andererseits mit dem zweiten Versorgungskanal, derart, dass die Rate in dem Fluidnetz durch eine Einstellung der Raten in dem ersten und in dem zweiten Versorgungskanal steuerbar ist.

14. Vorrichtung zur Erfassung nach Anspruch 13, **dadurch gekennzeichnet, dass** sie eine Gruppe von elektromechanischen Oszillatoren unterschiedlicher Skalen umfasst, wobei jeder der Oszillatoren ein Fluidnetz einer entsprechenden Skala integriert, und dass die verschiedenen Fluidnetze in Verbindung mit dem ersten und mit dem zweiten Versorgungskanal sind.

15. Verfahren zur Erfassung der Masse von Partikeln in flüssiger Umgebung, das mit einer Vorrichtung zur Erfassung nach einem der vorhergehenden Ansprüche durchgeführt wird, **dadurch gekennzeichnet, dass** es die folgenden Schritte umfasst:

  - Versorgen des/der Fluidnetze(s) mit einer interessierenden Lösung,
  - In-Schwingung-Versetzen des/der Oszillators/Oszillatoren bei einer/mehreren Resonanzfrequenz(en), und
  - Erfassen einer Verschiebung der Resonanzfrequenz bezüglich einer Referenz-Resonanzfrequenz.

**Claims**

1. A device for mass detection of particles in a liquid medium, including an electromechanical oscillator (7), excitation means (9) fitted so as to cause said oscillator to vibrate, a fluid supply circuit (5), and a fluid system (11) incorporated in said oscillator, wherein said fluid system (11) is in fluid communication with the fluid supply circuit (5), **characterised in that** the fluid system (11) includes at least one trapping site (21) which comprises a recess (115) and an aperture, and the geometry of which is configured to selectively accommodate and retain a particle of interest according to the size of said particle of interest.

2. A detection device according to claim 1, **characterised in that** said trapping site is located at a position corresponding to an amplitude maximum (23) of the vibration of the electromechanical oscillator (7).

3. A detection device according to claim 1 or 2, **characterised in that** said trapping site is formed in a fluid trapping branch installed in parallel with a bypass fluid branch, wherein said trapping branch has, if the trapping site is free, a lesser fluid resistance than that of said bypass branch.

4. A detection device according to claim 2 or 3, **characterised in that** the fluid system includes multiple trapping sites located at positions corresponding to different amplitude maxima of the vibration of the electromechanical oscillator.

5. A detection device according to claim 4, **characterised in that** the trapping sites are arranged in series at the terminals of the supply circuit.

6. A detection device according to claim 4, **characterised in that** the trapping sites are arranged in parallel at the terminals of the supply circuit.

7. A detection device according to any one of the previous claims, **characterised in that** said oscillator is of the hollow cavity plate type, having a shape which may be chosen from among a disk, a ring or a polygon.

8. A detection device according to claim 7, **characterised in that** said oscillator is square in shape and has a width and thickness such that the ratio of the width to the thickness is between 10 and 30.

9. A detection device according to any one of the claims 1 to 6, **characterised in that** said oscillator is a resonator of the cantilever beam, fixed-fixed beam, nanowire or membrane type.

10. A detection device according to any one of the previous claims, **characterised in that** said excitation means are chosen from among the following means: capacitive, piezo-electrical, piezo-metallic, electromagnetic, thermal, thermo-elastic, and optical.

11. A detection device according to any one of the previous claims, **characterised in that** it includes detection means chosen from among the following means: capacitive, piezo-electrical, piezo-metallic, piezo-resistive, thermo-elastic, and optical.

**12.** A detection device according to any one of the previous claims, **characterised in that** said fluid system is a fluid microsystem or nanosystem.

**13.** A detection device according to any one of the previous claims, **characterised in that** the supply circuit includes first and second supply channels which are separated from one another by the fluid system, wherein said fluid system is in communication firstly with the first supply channel and secondly with the second supply channel, such that the flow rate in the fluid system may be controlled by adjusting flow rates in the first and second supply channels.

**14.** A detection device according to claim 13, **characterised in that** it includes an assembly of electromechanical oscillators of different scales, wherein each of the oscillators incorporates a fluid system of a corresponding scale, and **in that** the different fluid systems are in communication with the first and second supply channels.

**15.** A method for mass detection of particles in a liquid medium, implemented with a detection device according to any one of the previous claims, **characterised in that** it includes the following steps:

- supplying the fluid system(s) with a solution of interest,
- causing the oscillator(s) to vibrate at (a) resonant frequency(ies), and
- detecting a shift of the resonant frequency relative to a reference resonant frequency.

FIG. 1

FIG. 2

FIG. 3

FIG. 4A

FIG. 4B

FIG. 5

FIG. 6A

FIG. 6B

EP 2 574 885 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2931549
- WO 2009141516 A

### Littérature non-brevet citée dans la description

- **J. LEE et al.** Toward Attogram Mass Measurements in Solution with Suspended Nanochannel Resonators. *Nano letters,* 2010, vol. 10, 2537-2542
- **W. H. TAN et al.** A trap-and-release integrated microfluidic system for dynamic microarray applications. *Proceedings of the National Academy of Sciences of the United States of America,* 2007, vol. 104, 1146-1151